## Europäisches Patentamt

## European Patent Office

## Office européen des brevets

(11) Veröffentlichungsnummer : **0 139 838**
**B1**

# (12) EUROPÄISCHE PATENTSCHRIFT

(45) Veröffentlichungstag der Patentschrift :
07.09.88

(21) Anmeldenummer : 84107070.9

(22) Anmeldetag : 20.06.84

(51) Int. Cl.⁴ : **C 04 B 28/02// E02D31/00,**
**C09K3/10, C09K17/00,**
**(C04B28/02, 22:00, 24:42)**

(54) Schadstoffresistente Dichtmasse.

(30) Priorität : 26.07.83 DE 3326836

(43) Veröffentlichungstag der Anmeldung :
08.05.85 Patentblatt 85/19

(45) Bekanntmachung des Hinweises auf die Patenterteilung : 07.09.88 Patentblatt 88/36

(84) Benannte Vertragsstaaten :
AT BE CH DE FR GB IT LI LU NL SE

(56) Entgegenhaltungen :
EP-A- 0 053 223
EP-A- 0 082 971
EP-A- 0 085 831
US-A- 3 772 065
CHEMICAL ABSTRACTS, Band 98, Nr. 24, 13. Juni
1983, Seite 306, Nr. 203422k, Columbus, Ohio, USA;
L.G. UGULAVA: "Increasing the water-tightness of
lightweight concretes" & NAUCHN. TR. - GRUZ.
POLITEKH. INST. im. V.I. LENINA 1981, (13), 61-63
CHEMICAL ABSTRACTS, Band 96, Nr. 26, 28. Juni
1982, Seiten 305-306, Nr. 222317e, Columbus, Ohio,
USA; & JP - A - 82 22162 (ONODA CEMENT CO., LTD.)
05.02.1982
ULLMANNS Encyklopädie der techn. Chemie, 4.
Auflage, Bd. 7 (1974), Seiten 340, 341
Die Akte enthält technische Angaben, die nach dem
Eingang der Anmeldung eingereicht wurden und die
nicht in dieser Patentschrift enthalten sind.

(73) Patentinhaber : **Hüls Troisdorf Aktiengesellschaft**
**Postfach 11 65**
**D-5210 Troisdorf (DE)**

(72) Erfinder : **Hass, Hansjürgen, Dr.**
**Telegrafstrasse 27**
**D-5210 Troisdorf-Spich (DE)**
Erfinder : **Burkhardt, Rudolf, Dr.**
**Im Hahn 1**
**D-5461 Vettelschoss (DE)**

## Beschreibung

Gegenstand der vorliegenden Erfindung sind abbindende Massen aus quellfähigen Tonmineralien, hydraulischen Bindemitteln, Füllstoffen und Wasser. Sie werden hauptsächlich zur Herstellung von Dichtwänden und ähnlichen Bodenabdichtungen, die in das Erdreich eingebracht werden, eingesetzt, um in diesem das Ausbreiten von eingedrungenen Schadstoffen einzudämmen.

Schadstoffe, die aufgrund irgendwelcher unkontrollierter Vorkommnisse in das Erdreich gelangen, müssen daran gehindert werden, sich weiter auszudehnen und das Grundwasser zu verunreinigen. Solche Schadstoffe sind beispielsweise Kohlenwasserstoffe, chlorierte Kohlenwasserstoffe, Phenole, Cyan- und Schwefelverbindungen aus Gasreinigungsmassen sowie Ablaugen aus undichten Deponien.

Es sind bereits Maßnahmen bekannt, das Ausbreiten dieser in das Erdreich gelangten Schadstoffe auf größere Gebiete zu verhindern. So ist es bereits bekannt, die aus der Grundbautechnik bekannten vertikalen Dichtwände zur Umschließung von Böden, die mit Schadstoffen verunreinigt sind, zu verwenden. Als Baumaterial für diese gewöhnlich als Schlitz- oder Schalwände ausgeführten Dichtwände dienen Gemische aus quellfähigen Tonmineralien, hydraulischen Bindemitteln, Wasser sowie gegebenenfalls noch Füllstoffe. Diese Materialien enthaltende Massen ergeben nach ihrer Verarbeitung Wände, die eine höhere Elastizität als Beton besitzen, so daß sie auch bei stärkeren Erschütterungen nicht zu Rißbildungen neigen.

Die k-Werte dieser Wände liegen bei $10^{-8}$ ms. Damit ist die Durchlässigkeit zwar genügend niedrig, um eine Baugrube ausreichend trocken zu halten ; mit diesen Werten läßt sich jedoch nicht verhindern, daß die Schadstoffkonzentration außerhalb des mit diesen Wänden umschlossenen Bereichs die zulässige Maximalkonzentration überschreitet. Nachteilig an Dichtwänden aus diesen Stoffen ist weiterhin die Tatsache, daß die abdichtende Wirkung von Tonmaterialien, die in diesen Massen enthalten sind, sowohl durch in Wasser gelöste Chemikalien als auch durch organische Flüssigkeiten stark herabgesetzt wird. Die Durchlässigkeit kann dabei infolge des Angriffs dieser Chemikalien um bis zu drei Zehnerpotenzen ansteigen (vgl. Anderson, Brown, Green, Proc. 8th. Am. Res. Symp. USEPA 1982, S. 179-190).

Es bestand deshalb die Aufgabe, im Boden befindliche Schadstoffe zu immobilisieren und für die als Makroeinkapselung bezeichnete Umschließung eines mit einem Schadstoff verschmutzten Bereichs ein Dichtwandmaterial für die Herstellung dieser Umschließungswände aufzufinden, das nach dem Abbinden das Austreten der Schadstoffe aus dem umschlossenen Bereich und ihr Eindringen in das Grundwasser weitgehend und möglichst lang anhaltend verhindert.

In Erfüllung dieser Aufgabe wurde nun eine schadstoffresistente abbindende Masse für Dichtwände und andere Bodenabdichtungen aus quellfähigen Tonmineralien, hydraulischen Bindemitteln, Füllstoffen und Wasser gefunden, die durch einen zusätzlichen Gehalt an Alkyltrialkoxysilanen der Formel R—Si(OR')$_3$, in der R für einen Alkylrest mit 2 bis 6 C-Atomen und R' für gleiche oder verschiedene Alkylreste mit 1 bis 4 C-Atomen stehen, oder den Hydrolyseprodukten dieser Silane in Mengen von 0,05 bis 5 Gew.-%, bezogen auf den Feststoffgehalt der Masse, und an Alkalialuminaten in solchen Mengen, daß deren Al$_2$O$_3$-Gehalt 0,01 bis 1,5 Gew.-% des Feststoffgehalts der Masse entspricht.

Es ist zwar aus der US-PS 3 772 065 bekannt, daß die Behandlung von Mauerwerk mit Silanen die Wasserdurchlässigkeit des Mauerwerks verringert. Dort handelt es sich aber um abgebundenes Mauerwerk, das mit dem Silan behandelt wird, während es sich im vorliegenden Fall um eine fließfähige Masse handelt, die quellfähige Tonmineralien enthält, bei der der Zusatz des Silans allein eine ungenügende Wasserresistenz ergibt. Erst die Kombination Silan/Aluminat ergibt eine nicht vorhersehbare wasserabweisende Wirkung bei gleichzeitigem Erhalt der Fließfähigkeit der Masse.

Die Silane können lösungsmittelfrei oder in Wasser gelöst der Masse hinzugefügt werden. Die wäßrige Lösung wird in bekannter Weise im schwachsauren Bereich hergestellt. Das Alkylsilan liegt dann überwiegend in Form von Silanolen vor. In der Formel für die Alkylsilane R—Si(OR')$_3$ steht dann R' auch für Wasserstoff.

Unter den Hydrolyseprodukten der Alkylsilane sollen also diese Silanole sowie Oligomere dieser Verbindungen verstanden werden, die ebenfalls noch wasserlöslich sind und maximal 8 Si-Atome, vorzugsweise bis zu 5 Si-Atome pro Molekül besitzen.

Die Alkylgruppe in den Alkylsilanen ist vorzugsweise unsubstituiert. Bevorzugte Alkylgruppen sind Propyl- und Isobutylgruppen.

Das Alkalialuminat wird zweckmäßigerweise als wässrige Lösung der Masse hinzugefügt. Sein Gehalt wird ebenfalls auf die Menge der Feststoffe bezogen ; er wird als Al$_2$O$_3$ berechnet und liegt zwischen 0,01 bis 1,5 Gew.-%, bezogen auf den Feststoffgehalt der Masse.

Unter quellfähigen Tonmineralien sollen hauptsächlich Silikate mit Schichtgitterstruktur verstanden werden, bei denen die Schichten durch das Eindringen von Wasser voneinander getrennt werden können. Als Beispiele für diese Mineralien seien Kaolinit, Attapulgit, die Bentonite und Montmorillonite genannt. Der Anteil dieser Quellstoffe in den erfindungsgemäßen Massen liegt zwischen 1 und 8 Gew.-%, bezogen auf die Gesamtmasse.

Unter hydraulischen Bindemitteln sind erfindungsgemäß anorganische Bindemittel zu verstehen, die durch Hydratisierung abbinden, wie z. B. hydraulische Mörtel oder Zemente. Ihr Anteil in der erfindungsgemäßen Masse liegt zwischen 8 und 20 Gew.-%, bezogen auf auf die Gesamtmasse.

Die Füllstoffe können in Mengen bis zu 70 Gew.-%, bezogen auf den Feststoffanteil in der Masse enthalten sein. Als Beispiele für einsetzbare Füllstoffe seien Gesteinsmehle, aus z. B. Kalkstein, Dolomit oder Quarzgestein.

Die Massen können weiterhin an sich bekannte Zuschlagstoffe enthalten, die das Fließverhalten während des Mischvorgangs sowie die Konsistenz und das Abbinden der Masse beeinflussen. Als Beispiele für diese Stoffe seien Phosphate, Alkalisilikate und Zucker genannt.

Die Herstellung der erfindungsgemäßen Massen erfolgt unter Verwendung der zur Herstellung von Dichtwandmassen üblichen Mischgeräte. Die erfindungsgemäßen Additive werden während des Mischvorgangs zugesetzt ; sie können auch bereits mit einem Teil der Feststoffe vorgemischt werden. Der Wassergehalt wird dabei so eingestellt, daß eine zähflüssige geschmeidige Masse entsteht. Aus diesen Massen lassen sich Dichtwände herstellen, die einen höheren Abdichtungseffekt und eine größere Schadstoffbeständigkeit besitzen als Massen ohne die erfindungsgemäßen Zusätze. Aufgrund dieser Eigenschaften eignen sie sich besonders gut zur Umschließung von Schadstoffbereichen in wasserdurchlässigen Böden. Eine solche Umschließung läßt sich problemlos auch mit einer ebenfalls schadstoffresistenten Abdichtungssohle verbinden.

Die erfindungsgemäßen Massen eignen sich weiterhin allein oder in Verbindung mit weiteren an sich bekannten Abdichtungsmaterialien, wie z. B. Kunststoffolien, zur Auskleidung von neu angelegten Deponien für schadstoffhaltige Abfälle.

## Beispiel 1

Auf der Grundlage gleicher Grundrezepturen wurden eine übliche Dichtwandmasse (A) und eine erfindungsgemäß modifizierte Masse -B) wie folgt hergestellt :

A) 24 g Natriumbentonit wurden mit 400 ml Wasser 15 Min. gerührt und unter kräftigem Rühren hintereinander 460 g Kalksteinmehl und 100 g Hochofenzement HOZ 35 L portionsweise zugesetzt.

B) In 183 ml Wasser wurden 2,3 g wässrige Natriumaluminatlösung mit einem $Al_2O_3$-Gehalt von 25 Gew.-% aufgelöst. In dieser Lösung wurden 460 g Kalksteinmehl suspendiert und diese Suspension mit einer Lösung von 3 g Propyltrimethoxysilan in 27 ml Wasser (die bei einem pH von 3,3 hergestellt wurde) versetzt. Die erhaltene Suspension wurde mit einer in einem getrennten Arbeitsgang hergestellten Suspension von 24 g Bentonit in 190 ml Wasser vermischt und in das erhaltene Gemisch wurden 100 g Hochofenzement untergemischt.

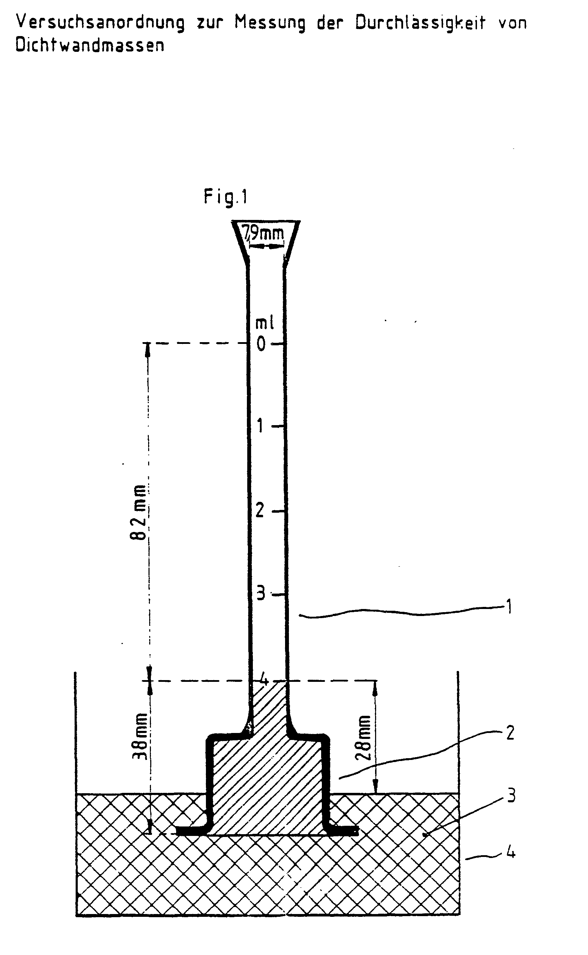

Die beiden Massen wurden in den in Fig. 1 skizzierten Prüfröhrchen auf ihre Eigenschaften untersucht. Das Prüfröhrchen enthält eine ml-Einteilung. Es wird an seinem unteren, ausgebauchten Ende 2 bis zur unteren Markierung (4 ml) mit der jeweiligen Masse gefüllt. Nach dem Abbinden werden die Röhrchen entsprechend Fig. 1 mit ihrem unteren ausgebauchten Ende in ein Gemisch aus Sand und Wasser 3, das sich in einem Becher 4 befindet, 10 mm tief eingetaucht. Die Röhrchen werden dann bis zur oberen Markierung (0 ml) mit Wasser bzw. gesättigter, ca. 0,1 %iger wässriger Trichlorethylenlösung gefüllt. Das Absinken des Flüssigkeitsstandes, der in regelmäßigen Abständen abgelesen und wieder aufgefüllt wurde, zeigte die durchgelaufene Flüssigkeitsmenge Q an, die der Durchlässigkeit proportional ist.

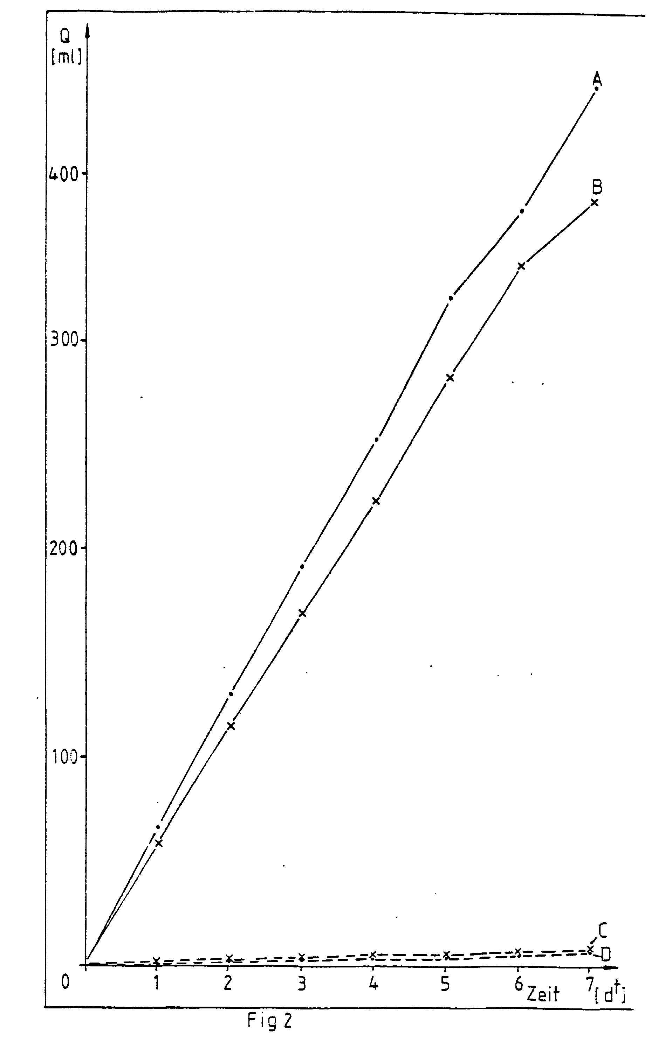

In Fig. 2 sind die erhaltenen Ergebnisse graphisch aufgezeigt. In dieser Figur zeigen die Kurven A und B die Ergebnisse mit den nicht erfindungsgemäßen Massen an, wobei Kurve A die Werte für die Wasserbehandlung und Kurve B für die Behandlung mit der Trichlorethylenlösung angeben. Kurve C zeigt die Ergebnisse für die erfindungsgemäße Masse B bei Belastung mit Wasser und Kurve D bei Belastung mit der Trichlorethylenlösung an. Die erfindungsgemäße Masse dichtet demzufolge wesentlich besser gegen Wasser und wässrige Trichlorethylenlösung ab als die nicht modifizierte Masse. Die Durchlaufmengen wurden auf etwa 2 bis 7 % reduziert.

Während der Meßdauer, die für die erfindungsgemäße Masse auf 28 Tage verlängert wurde, blieb die Durchlässigkeit praktisch konstant.

## Beispiel 2

Analog Beispiel 1 B) wurde mit gleicher Grundrezeptur, aber unter Verwendung von 3 g Isobutyltrimethoxysilan anstelle von Propyltrimethoxysilan eine erfindugsgemäß modifizierte Masse hergestellt. Die nicht modifizierte Vergleichsmasse wurde abweichend von Beispiel 1 A) zur Angleichung an die Herstellung der modifizierten Masse durch Vermischen der Suspension von 24 g Natriumbentonit in 190 ml Wasser mit der Suspension von 460 g Kalksteinmehl in 210 ml Wasser und anschließende Zementzugabe hergestellt. (Eine Änderung der Eigenschaften gegenüber der nach Beispiel 1 A) hergestellten Masse konnte nicht festgestellt werden).

Ergebnis der Durchlässigkeitsprüfung, die wie in Beispiel 1 durchgeführt wurde :

Nach einer Abbindezeit von 3 Tagen blieben die Durchflußmengen während der Prüfdauer von 7 Tagen praktisch konstant. Bei Belastung mit Wasser bzw. Trichlorethylen(TCE)-Lösung wurden in 7 Tagen folgende Gesamtdurchflußmengen gemessen :

3

| Masse | Belastung mit | ml in 7 Tagen |
|---|---|---|
| erfindungsgemäß | Wasser | 21,2 |
| nicht modifiziert | Wasser | 230,6 |
| erfindungsgemäß | TCE-Lösung | 20,7 |
| nicht modifiziert | TCE-Lösung | 263,2 |

## Beispiel 3

Unter Verwendung eines Labormischaggregats mit Umwälzpumpe wurden erfindungsgemäße Massen nach folgenden Rezepturen hergestellt:

| Bestandteil | Rezeptur I | Rezeptur II |
|---|---|---|
| Wasser | 2500 ml | 2000 ml |
| Bentonit | 120 g | - |
| Tonmehl | - | 120 g |
| Kalksteinmehl | 2300 g | 2300 g |
| Propyltrimethoxysilan | 15 g | 15 g |
| Natriumaluminat, 25 % $Al_2O_3$ | 11 g | 11 g |
| Portlandzement PZ 35 F | 520 g | 520 g |

Die Bestandteile wurden in der oben angegebenen Reihenfolge in den Mischer gegeben und jeweils ca. 5 Min. (Bentonit bzw. Tonmehl 10 Min.) gemischt. Das Propyltrimethoxysilan wurde als 10 %iges wässriges Hydrolysat (siehe Beispiel 1), das Natriumaluminat in 10-facher Verdünnung zugegeben. Die dafür benötigten Wassermengen waren in den angegebenen Gesamtmengen enthalten.

Die gleichen Mischungen wurden im kleineren Maßstab (1 : 5) unter Verwendung eines Laborrührwerks hergestellt. Die geringere Homogenität dieser Massen war an der Wasserabscheidung der Tonmehlmasse zu erkennen, dei bei der mit Umwälzpumpe gemischten Masse nicht auftrat.

Bei der Durchlässigkeitsprüfung (wie Beispiel 1) wurden nach einer Prüfdauer von 19 Tagen folgende Gesamtdurchflußmengen gemessen (Wasser):

| Mischer | Rezeptur | ml in 19 Tagen |
|---|---|---|
| Umwälzpumpe | I | 18,8 |
| Umwälzpumpe | II | 13,9 |
| Rührwerk | I | 30,7 |
| Rührwerk | II | 54,3 |

Nach diesen Ergebnissen sind bei Verwendung der auf den Baustelle üblichen Pumpenmischaggregate homogenere Massen mit noch geringeren Durchlässigkeiten zu erwarten als bei Verwendung von Laborrührwerken wie in den Beispielen 1 und 2.

## Patentanspruch

Schadstoffresistente Masse für Dichtwände und andere Bodenabdichtungen aus quellfähigen Tonmineralien, hydraulischen Bindemitteln, Füllstoffen und Wasser, gekennzeichnet durch einen zusätzlichen Gehalt an Trialkoxysilanen der Formel $R—Si(OR')_3$, in der R einen aliphatischen Rest mit 2 bis 6 C-Atomen und R' gleiche oder verschiedene Alkylreste mit 1 bis 4 C-Atomen bedeuten, oder deren Hydrolyseprodukten in Mengen von 0,05 bis 5 Gew.-%, bezogen auf den Feststoffgehalt der Masse, und an Alkalialuminaten in solchen Mengen, daß deren $Al_2O_3$-Gehalt 0,01 bis 1,5 Gew.-% des Feststoffgehalts der Masse entspricht.

**Claim**

Pollutant resisting composition for retention walls and other ground seals which is formed of swellable clay minerals, hydraulic binders, fillers and water, characterised by an additional content of trialkoxysilane of the formula $R—Si(OR')_3$, in which R denotes an aliphatic residue with 2 to 6 C-atoms and R′ the same or different alkyl residues with 1 to 4 C-atoms, or hydrolysis products thereof, in amounts of 0.05 to 5 % by weight related to solids content of the composition, and of alkali aluminates in such amounts that the $Al_2O_3$ content thereof corresponds to 0.01 to 1.5 % by weight of the solids content of the composition.

**Revendication**

Matériau résistant aux matières nocives pour parois étanches et autres agents d'étanchéité des sols obtenus à partir de minéraux argileux susceptibles de gonfler de liants hydrauliques, de charges et d'eau, caractérisé par une teneur complémentaire en trialcoxysilanes de formule $R—Si(OR')_3$, dans laquelle R représente un reste aliphatique ayant 2 à 6 atomes de C et R′ un reste alkyle identique ou différent avec 1 à 4 atomes de C, ou bien leurs produits d'hydrolyse en quantités allant de 0,05 à 5 % en poids, par rapport à la teneur en matières solides du matériau, et en aluminates alcalins en quantités telles que leur teneur en $Al_2O_3$ corresponde à 0,01 à 1,5 % en poids de la teneur en matières solides du matériau.

Versuchsanordnung zur Messung der Durchlässigkeit von
Dichtwandmassen

Fig.1

Fig 2